# EUROPÄISCHE PATENTSCHRIFT

(11) **EP 3 339 907 B1**
(45) Veröffentlichungstag und Bekanntmachung des Hinweises auf die Patenterteilung: **24.05.2023**
(21) Anmeldenummer: 16206172.5
(22) Anmeldetag: 22.12.2016
(51) Int. Cl.: G01S 19/39, H04K 3/00, G01S 19/21, G07B 15/06

(54) **VERFAHREN ZUR SIGNALISIERUNG EINER FEHLFUNKTION EINER POSITIONSBESTIMMUNGSVORRICHTUNG, SIGNALISIERUNGSSYSTEM, GEBÜHRENERHEBUNGSSYSTEM, POSITIONSBESTIMMUNGSVORRICHTUNG UND COMPUTERPROGRAMMPRODUKT**
METHOD FOR SIGNALLING A MALFUNCTION OF A POSITION DETECTING APPARATUS, SIGNALLING SYSTEM, FEE CHARGING SYSTEM, POSITION DETERMINATION DEVICE AND COMPUTER PROGRAM PRODUCT
PROCÉDÉ DE SIGNALISATION D'UN DYSFONCTIONNEMENT D'UN DISPOSITIF DE DÉTERMINATION DE POSITION, SYSTÈME DE SIGNALISATION, SYSTÈME DE PÉAGE, DISPOSITIF DE DÉTERMINATION DE POSITION ET PRODUIT-PROGRAMME INFORMATIQUE

(43) Veröffentlichungstag der Anmeldung: 27.06.2018
(73) Patentinhaber: Toll Collect GmbH, 10785 Berlin (DE)
(72) Erfinder: Wist, Sebastian, 14482 Potsdam (DE); Manojlovic, Ognjen, 10439 Berlin (DE); Slizewski, Zbigniew, 10829 Berlin (DE); Chojnicki, Krzysztof, 13353 Berlin (DE)
(74) Vertreter: adares Patent- und Rechtsanwälte Reininger & Partner GmbB

(56) Entgegenhaltungen:
- EP-A1- 3 002 734
- EP-B1- 2 487 506
- WO-A1-2015/002223
- DE-A1- 19 844 458
- JP-A- H11 183 589
- US-A1- 2008 004 036
- US-A1- 2011 151 827

## Beschreibung

Die Erfindung betrifft ein Verfahren zur Signalisierung einer Fehlfunktion einer Positionsbestimmungsvorrichtung, insbesondere zur Signalisierung einer mangelnden Betriebsfähigkeit oder einer Störung beispielsweise aufgrund von Störsignalen. Ferner betrifft die Erfindung ein zugehöriges Signalisierungssystem, ein Gebührenerhebungssystem, eine Positionsbestimmungsvorrichtung und ein Computerprogrammprodukt.

Eine Positionsbestimmungsvorrichtung bildet die zentrale Komponente sowohl eines Navigationssystems, als auch eines Mautsystems. Bei letzterem handelt es sich um ein Gebührenerhebungssystem, welches die von einem Fahrzeug benutzten Straßen oder andere Verkehrsstrukturen wie Brücken und Tunnel bzw. die durch das Fahrzeug auf diesen Strukturen zurückgelegten Strecken ermittelt und darauf basierend dem Fahrzeughalter eine entsprechende Mautrechnung zukommen lässt.

Eine satellitengestützte Positionsbestimmungsvorrichtung ermittelt Positionen eines Fahrzeuges mittels eines globalen Navigationssatellitensystems (GNSS), welches durch eine Vielzahl an Navigationssatelliten gebildet wird, die jeweils fortlaufend ein Signal aussenden. Mittels eines GNSS-Empfängers werden Signale mehrerer der Navigationssatelliten empfangen und ausgewertet, um daraus die genaue Position zu berechnen. Für die Bestimmung einer Position in einer bekannten Höhe über oder auf der Erdoberfläche reichen Signale von 3 Satelliten aus. Signale von 4 Satelliten sind dann notwendig, wenn zusätzlich zur Längen- und Breitenkoordinate einer Position auch die Höhe der Position über der Erdoberfläche bestimmt werden soll. Üblicherweise sind beispielsweise beim GPS-System von jeder Position der Erde aus jederzeit etwa 6-10 Navigationssatelliten "sichtbar".

Eine in einem Fahrzeug installierte Positionsbestimmungsvorrichtung wird auch als On-Board Unit (OBU) oder als Fahrzeuggerät (FzG) bezeichnet. Aufgrund von Materialermüdung, Alterung, fehlerhaftem Einbau, externen Einflüssen und dergleichen, kann die Qualität der Positionsbestimmung im Laufe der Zeit abnehmen. Das zeigt sich im Extremfall dadurch, dass die Positionsbestimmung irgendwann plötzlich nicht mehr durchgeführt werden kann. Es wird dann von einer sogenannten "Nichterkennung" gesprochen. Je nach Konfiguration des FzG, wird dem Fahrzeughalter eine einzelne Nichterkennung oder die Häufung solcher Ereignisse gemeldet. Ist die Positionsbestimmungsvorrichtung Teil eines Gebührenerhebungssystems, dann wird der Fahrzeughalter in der Regel aufgefordert, das FzG zeitnah überprüfen zu lassen.

Das Versagen eines FzG ist insbesondere in Zusammenhang mit Gebührenerhebungssystemen ein wichtiges Thema. Es muss ermittelt werden, ob die Nichterkennung ihre Ursache tatsächlich in einer mangelnden Betriebsfähigkeit des FzG hat, oder möglicherweise daran liegt, dass die Satellitensignale gar nicht den GNSS-Empfänger erreichen, beispielsweise wenn sich das Fahrzeug in einem Tunnel befindet. Hierzu wird in EP 2 487 506 B1 vorgeschlagen, bei einem Ausbleiben des GNSS-Empfangs eine Störung anhand einer GNSS-Qualitätsprüfung sowie durch Auswertung von Mobilfunk-Empfangscharakteristiken festzustellen. Dieses Verfahren ist in der Implementierung aufwendig und benötigt signifikante Rechenleistung. Zudem müssen die Qualitätsprüfung und die Messung der Empfangscharakteristiken in Echtzeit erfolgen. Das bedeutet, das FzG muss im Falle eines Ausbleibens des GNSS-Empfangs sofort weitere Messungen durchführen, die bei ordnungsgemäßer Funktion des FzG üblicherweise nicht benötigt werden. Eine eventuell vorliegende Fehlfunktion kann also nicht im Nachhinein, beispielsweise anhand der Auswertung von Ablaufprotokollen erkannt werden, wenn diese Messungen nicht rechtzeitig durchgeführt wurden.

Es ist Aufgabe der Erfindung, ein Verfahren bereitzustellen, mit dem eine Fehlfunktion einer Positionsbestimmungsvorrichtung mit hoher Sicherheit aber mit geringem zusätzlichen Materialaufwand erkannt und signalisiert werden kann. Es ist weiterhin Aufgabe der Erfindung, zu diesem Zweck ein Signalisierungssystem, ein Gebührenerhebungssystem, eine Positionsbestimmungsvorrichtung und ein Computerprogrammprodukt bereitzustellen.

Die Aufgabe wird gemäß der Erfindung durch ein Verfahren mit den Merkmalen des Anspruchs 1, durch ein Signalisierungssystem mit den Merkmalen des Anspruchs 8, durch ein Gebührenerhebungssystem mit den Merkmalen des Anspruchs 12, durch eine Positionsbestimmungsvorrichtung mit den Merkmalen des Anspruchs 13 und durch ein Computerprogrammprodukt mit den Merkmalen des Anspruchs 14 gelöst. Vorteilhafte Weiterbildungen der Erfindung sind in den Unteransprüchen aufgeführt.

Die Erfindung beruht auf der Überlegung, bei Ermittlung einer Positionsbestimmungsqualität des GNSS-Empfangs, die einen vorgegebenen GNSS-Qualitätsschwellwert unterschreitet, insbesondere einem Aussetzen der GNSS-Positionsbestimmung, oder, wenn eine Gesamtheit mehrerer GNSS-Positionsbestimmungen einen Fahrzeugstillstand anzeigt, anhand einer Erfassung und Auswertung der Mobilfunk-Empfangscharakteristiken zu erkennen, ob eine Fehlfunktion der Positionsbestimmungsvorrichtung vorliegt. Anhand der erfassten Mobilfunk-Empfangscharakteristiken wird erfindungsgemäß ermittelt, ob sich die Positionsbestimmungsvorrichtung und damit das Fahrzeug bewegt, während die GNSS-Positionsbestimmung eigentlich auf einen Fahrzeugstillstand hindeutet oder überhaupt keine Positionsbestimmung möglich ist. Wenn eine solche Diskrepanz zwischen der GNSS-Positionsbestimmung und der erfassten Mobilfunk-Empfangscharakteristik erkannt wird, dann wird auf eine Fehlfunktion der Positionsbestimmungsvorrichtung geschlossen.

Eine Fehlfunktion kann einerseits aus einer fehlerhaften Komponente der Positionsbestimmungsvorrichtung herrühren, beispielsweise wenn der GNSS-Empfänger nicht korrekt arbeitet. Es handelt sich dann insbesondere um ein Problem mit der Hardware und/oder der Software der Positionsbestimmungsvorrichtung. Die Fehlfunktion kann jedoch auch von einer Störquelle verursacht sein, welche in der Nähe der Positionsbestimmungsvorrichtung platziert ist. Eine Störquelle kann insbesondere ein Störsignal aussenden, mit dem der Empfang von Signalen von Satelliten des GNSS gestört werden soll. Ein Störsignal, beispielsweise in Form eines Rauschens oder in Form einzelner oder mehrerer frequenzvariabler oder frequenzinvariabler Träger auf einem oder mehreren Betriebsbändern, z.B. auf dem Betriebsband L1 beim GPS, wird als Jamming-Signal bezeichnet. Ein Störsignal in Form eines Täuschungssignals, das den Signalen mehrerer Satelliten entspricht, jedoch eine falsche Information trägt, die in einem GNSS-Empfänger zur Bestimmung einer anderen Position als der wahren Position führt, wird als Spoofing-Signal bezeichnet. Bei einem Jamming-Signal kann keine Positionsbestimmung erfolgen, während ein Spoofing-Signal in der Lage ist, einen Fahrzeugstillstand vorzutäuschen.

Konkret wird erfindungsgemäß zunächst ein Fehlerzeitbereich ermittelt. Es handelt sich hierbei einfach gesprochen um einen Zeitbereich, in dem entweder in einem ersten nicht erfindungsgemäßen Fall keine Positionsbestimmung möglich ist oder in einem zweiten erfindungsgemäßen Fall in dem basierend auf die Positionsbestimmung ein Stillstand ermittelt wird. Im ersten Fall liegt eine Positionsbestimmungsqualität, welche mittels des GNSS-Empfängers ermittelt wird, unterhalb eines vorgegebenen GNSS-Qualitätsschwellwertes. Das bedeutet, es wird entweder kein GNSS-Signal empfangen, oder das empfangene Signal ist so schwach oder hat eine so schlechte Qualität, dass eine Positionsbestimmung nicht korrekt durchgeführt werden kann. Der GNSS-Qualitätsschwellwert kann aus empirischen Beobachtungen stammen und in der Positionsbestimmungsvorrichtung oder in einer anderen, nachfolgend erläuterten Komponente eines Signalisierungssystems hinterlegt sein.

Die Ermittlung der Positionsbestimmungsqualität mittels des GNSS-Qualitätsschwellwertes erlaubt es, die Entscheidung, ob eine Positionsbestimmung möglich ist oder nicht, anhand eines exakten Schwellwertvergleichs zu treffen. Dies ist dann sinnvoll, wenn drei oder mehr GNSS-Satelliten für den GNSS-Empfänger sichtbar sind, die Positionsbestimmungsvorrichtung mit ihren Signalen die Position jedoch nicht verlässlich genug bestimmen kann, um sie als Grundlage von Navigations- oder Gebührenermittlungszwecken zu nutzen. Bei der Positionsbestimmungsqualität handelt es sich also um einen Parameter, welcher die Qualität der Positionsbestimmung kennzeichnet, also die Verlässlichkeit der mittels der Satellitensignale ermittelten Position. Ein solcher Parameter ist insbesondere der geometrische Ortungsfehler (englisch DOP = Dilution Of Precision). Bei einer zweidimensionalen Positionsbestimmung ist dieser Parameter beispielsweise durch den Wert HDOP (Horizontal Dilution Of Precision) gegeben, der im besten Fall HDP = 1,0 ist. Es ist zu beachten, dass der HDOP-Wert bei Verschlechterung der Positionsbestimmungsqualität steigt, so dass die Unterschreitung eines Qualitätsschwellwertes in diesem Fall eine Überschreitung eines HDOP-Schwellwertes bedeutet. Beispielsweise kann selbst dann von einem Aussetzen der GNSS-Positionsbestimmung gesprochen werden, wenn eine eigentlich gültige Position ermittelt wurde, der zugehörige HDOP-Wert jedoch z.B. einen Schwellwert von 3,0 überschreitet.

Alternativ oder zusätzlich kann jedoch die Positionsbestimmungsqualität des GNSS-Empfangs einen vorgegebenen GNSS-Qualitätsschwellwert dann als unterschritten gelten, wenn tatsächlich eine gültige Position nicht ermittelt werden kann. In diesem extremen Fall ist die Positionsbestimmungsqualität sicher auch nicht ausreichend, da überhaupt keine Positionsbestimmung möglich ist. Wenn also eine Positionsbestimmung gänzlich nicht möglich ist, dann liegt die Positionsbestimmungsqualität bereits definitionsgemäß unterhalb des Qualitätsschwellwertes.

Im zweiten Fall ist der Fehlerzeitbereich dadurch gekennzeichnet, dass die innerhalb des Fehlerzeitbereichs ermittelten Positionen einen räumlichen Stillstand beschreiben. Das bedeutet, dass eine Auswertung der innerhalb des Fehlerzeitbereichs ermittelten Positionen ergibt, dass sich die Positionsbestimmungsvorrichtung und damit das Fahrzeug räumlich nicht fortbewegen. Auch bei tatsächlichem Stillstand des Fahrzeuges werden bei mehrmaligem Ermitteln der Fahrzeugposition mittels Auswertung von GNSS-Satellitensignalen die Ergebnisse nicht immer identisch sein. Vielmehr wird eine Streuung der Positionsdaten vorliegen, welche berücksichtigt werden muss, um einen Stillstand zu erkennen. Gemäß einer bevorzugten Ausführungsform wird daher festgestellt, dass alle innerhalb des Fehlerzeitbereichs ermittelten Positionen einen räumlichen Stillstand der Positionsbestimmungsvorrichtung während des Fehlerzeitbereichs beschreiben, wenn eines oder mehrere folgender Situationen vorliegen:
a) Die innerhalb des Fehlerzeitbereichs mittels des GNSS-Empfängers ermittelten Positionen weichen paarweise um nicht mehr als eine vorgegebene Maximaldistanz voneinander ab. Das bedeutet, dass jede zwei beliebige, innerhalb des Fehlerzeitbereichs ermittelte Positionen voneinander einen Abstand kleiner oder gleich der Maximaldistanz haben. In diesem Fall liegen also alle innerhalb des Fehlerzeitbereichs ermittelten Positionen innerhalb einer Kugel mit dem Durchmesser der Maximaldistanz.
b) Die innerhalb des Fehlerzeitbereichs mittels des GNSS-Empfängers ermittelten Positionen befinden sich alle innerhalb eines vorgegebenen Raumintervalls um einen Raumintervall-Mittelpunkt. Auch hier befinden sich also alle innerhalb des Fehlerzeitbereichs ermittelten Positionen innerhalb einer Kugel einer bestimmten Größe. Das Raumintervall bildet hierbei den Kugelradius.

Die vorangehend beschriebenen Situationen basieren auf Untersuchungen an den ermittelten Positionen, um festzustellen, dass diese Positionsdaten auf einen Stillstand der Positionsbestimmungsvorrichtung schließen lassen. Die hierbei genannten Parameter Maximaldistanz, Raumintervall und Raumintervall-Mittelpunkt können zum Teil systembedingt sein und können entweder vorgegeben sein oder während des Betriebs der Positionsbestimmungsvorrichtung aus den ermittelten Positionsdaten abgeleitet werden. Der Parameter Raumintervall-Mittelpunkt kann beispielsweise aus dem geometrischen Mittel einer Folge von ermittelten Positionsdaten ermittelt werden.

Innerhalb des Fehlerzeitbereichs können die beiden oben beschriebenen Fälle auch gemeinsam auftreten. Das bedeutet, dass beispielsweise während eines oder mehrerer Teilintervalle des Fehlerzeitbereichs keine oder zumindest keine sichere Positionsbestimmung möglich ist, weil entweder nicht ausreichend viele Satelliten aus Sicht des GNSS-Empfängers sichtbar sind oder die Positionsbestimmungsqualität des GNSS-Empfangs zu gering ist, und die während eines oder mehrerer anderer Teilintervalle des Fehlerzeitbereichs ermittelten Positionen zusammen einen räumlichen Stillstand der Positionsbestimmungsvorrichtung beschreiben.

Außerdem wird erfindungsgemäß eine erste und wenigstens eine zweite Mobilfunk-Empfangscharakteristik des Mobilfunk-Empfangs des Mobilfunk-Empfängers erfasst und ausgewertet. Als Ergebnis der Auswertung der ersten und der zweiten Mobilfunk-Empfangscharakteristik wird erfindungsgemäß ermittelt, ob sich die Positionsbestimmungsvorrichtung während des ermittelten Fehlerzeitbereichs geographisch bewegt hat. Die Auswertung der Mobilfunk-Empfangscharakteristiken kann in Echtzeit erfolgen, also innerhalb des Fehlerzeitbereichs. Sie kann jedoch auch nachträglich, beispielsweise anhand eines Kommunikationsprotokolls des Mobilfunk-Empfängers, durchgeführt werden.

Unter einer Mobilfunk-Empfangscharakteristik wird allgemeine jede Information verstanden, die geeignet ist, das Spektrum an physikalischen Parametern aller möglichen Empfangskanäle - sprich: Sendefrequenzen - nicht nur eines, sondern prinzipiell jedes verfügbaren Mobilfunknetzes, zu beschreiben. Bevorzugt ist eine Mobilfunk-Empfangscharakteristik durch wenigstens einen Parameter oder Daten eines Datensatzes charakterisiert, die ein Maß für eine Mobilfunk-Empfangscharakteristik, insbesondere von Signalstärken / -pegeln detektierbarer Kommunikations-/ Frequenzkanäle, repräsentieren oder - alternativ dazu - einen mangelnden Mobilfunk-Empfang repräsentieren.

Wenn sich die Positionsbestimmungsvorrichtung bewegt, dann lässt sich dies anhand der erfassten Mobilfunk-Empfangscharakteristik feststellen. Wenn es sich bei der erfassten Mobilfunk-Empfangscharakteristik beispielsweise um eine Signalstärke eines durch einen bestimmten Sendemast einer Basisstation entsendeten Mobilfunk-Signals handelt, dann wird die Signalstärke mit der Zeit zu- oder abnehmen, je nachdem, ob sich die Positionsbestimmungsvorrichtung dem Sendemast nähert oder sich von ihm entfernt. Da nun erfindungsgemäß die erste Mobilfunk-Empfangscharakteristik, hier der erste Signalstärkewert, zu einem früheren Zeitpunkt und die zweite Mobilfunk-Empfangscharakteristik, hier der zweite Signalstärkewert, zu einem späteren Zeitpunkt innerhalb des Fehlerzeitbereiches gemessen wird, dann kann anhand einer Signalstärkeänderung festgestellt werden, dass sich die Positionsbestimmungsvorrichtung zwischen dem ersten und dem zweiten Zeitpunkt bewegt hat. Genauere Informationen erhält man, wenn die Mobilfunk-Empfangscharakteristik die Signalstärken der Mobilfunk-Signale zweier Sendemasten umfasst, welche zu unterschiedlichen Basisstationen gehören. In diesem Fall kann auch die ungefähre Richtung der Bewegung der Positionsbestimmungsvorrichtung ermittelt werden. Jedenfalls lässt sich dann die Sicherheit erhöhen, mit der auf eine Bewegung der Positionsbestimmungsvorrichtung geschlossen wird.

Gemäß einer Weiterbildung der Erfindung kann anhand der erfassten ersten Mobilfunk-Empfangscharakteristik die Position der Positionsbestimmungsvorrichtung an dem ersten Zeitpunkt und anhand der erfassten zweiten Mobilfunk-Empfangscharakteristik die Position der Positionsbestimmungsvorrichtung an dem zweiten Zeitpunkt ermittelt werden. Anhand eines Vergleichs der beiden Positionen kann dann erkannt werden, ob eine signifikante Bewegung des Positionsbestimmungsvorrichtung stattgefunden hat oder nicht. Die Positionsermittlung mittels der ermittelten Mobilfunk-Empfangscharakteristik kann beispielsweise erfolgen, indem die Signalstärken der Mobilfunk-Signale aller vom Mobilfunk-Empfänger anhand dieser Mobilfunk-Signale erkannten Basisstationen ausgewertet werden. Aufgrund der Signalstärken kann ein Abstand zu jeder Basisstation zumindest näherungsweise errechnet werden, um dann mittels Triangulation die Position der Positionsbestimmungsvorrichtung in Bezug auf diese Basisstationen zu ermitteln.

Gemäß einer bevorzugten Ausführungsform wird die Anzahl von an unterschiedlichen Zeitpunkten innerhalb des Fehlerzeitbereichs für den Mobilfunk-Empfänger erkennbaren Sendemasten oder Basisstationen als Grundlage für die Entscheidung genommen, dass eine Fehlfunktion der Positionsbestimmungsvorrichtung signalisiert wird. Erkennbar ist ein Sendemast oder eine Basisstation für den Mobilfunk-Empfänger dann, wenn das vom Sendemast bzw. vom Sendemast der Basisstation ausgesendete Mobilfunk-Signal, beispielsweise ein regelmäßiges ausgesendetes Signal, vom Mobilfunk-Empfänger empfangen und analysiert werden kann, um eine Kennung des Sendemastes oder der Basisstation abzuleiten, insbesondere die sogenannte Zellkennung. Dazu muss das Mobilfunk-Signal an der Empfangs-Antenne des Mobilfunk-Empfängers eine ausreichend hohe Signalstärke aufweisen.

Die Anzahl der an einem Ort auf der Erde erkennbaren Sendemasten hängt vom Mobilfunk-Empfänger, aber auch von der örtlichen Gegebenheit selbst ab. Beispielsweise ist in einem Stadtzentrum die Zellendichte und somit auch die Anzahl an Sendemasten, die an einem bestimmten Ort erkannt werden können, üblicherweise viel höher, als an entlegeneren Orten. Es lässt sich jedoch, möglicherweise in Abhängigkeit von Parametern des Mobilfunk-Empfängers und/oder in Abhängigkeit von der Region, in dem sich die Positionsbestimmungsvorrichtung befindet, ein Anzahlschwellwert festlegen, welcher der maximal zu erwartenden erkennbaren Sendemasten entspricht. Übersteigt die Anzahl an erkennbaren Sendemasten diesen Anzahlschwellwert, dann wird gemäß einer bevorzugten Ausführungsform entschieden, dass eine Fehlfunktion signalisiert wird. Im Falle des Überschreitens kann nämlich davon ausgegangen werden, dass sich die Positionsbestimmungsvorrichtung bewegt hat.

Vorzugsweise führt der Mobilfunk-Empfänger, insbesondere während des Fehlerzeitbereichs, eine Mobilfunk-Kommunikation durch, ist also in einer Kommunikationszelle eines Mobilfunk-Systems eingewählt. In diesem Fall kann eine Auswertung der ersten Mobilfunk-Empfangscharakteristik zu einem Handover führen, wenn festgestellt wird, dass das von einem Sendemast ausgesendete Signal stärker ist, als Signal eines gegenwärtigen Sendemastes, in dessen Kommunikationszelle der Mobilfunk-Empfänger eingewählt ist. Dies wird nachfolgend erläutert.

Der eine Mobilfunk-Kommunikation durchführende Mobilfunk-Empfänger ist immer bestrebt, die Mobilfunk-Kommunikation aufrecht zu erhalten. Er wird sich daher zu jeder Zeit mit einer Sendeeinrichtung, insbesondere einer Basisstation, bzw. mit einem Sendemast des Mobilfunk-Systems verbinden, von der/dem ein guter Signalempfang möglich ist. Dies trifft in der Regel bei der geographisch nächstliegenden Sendeeinrichtung zu. Auch während eines Stillstands des Mobilfunk-Empfängers kann es vorkommen, dass er sich in unterschiedlichen Sendeeinrichtungen einwählt bzw. sich mit unterschiedlichen Sendeeinrichtungen verbindet, beispielsweise wenn die Signalstärke einer Sendeeinrichtung fluktuiert. Wird jedoch eine vorgegebene Mindestzahl an unterschiedlichen Sendeeinrichtungen überschritten, dann ist davon auszugehen, dass der Mobilfunk-Empfänger tatsächlich bewegt wird oder wurde.

Wenn sich nun die Positionsbestimmungsvorrichtung bewegt, dann wird der Mobilfunk-Empfänger zur Aufrechterhaltung der Mobilfunk-Kommunikation sich nacheinander mit einer Folge von Sendeeinrichtungen verbinden. Es findet also jedes Mal ein sogenannter Handover von einer Sendeeinrichtung zur nächsten Sendeeinrichtung oder von einer Kommunikationszelle zur nächsten statt. Um zu ermitteln, ob sich die Positionsbestimmungsvorrichtung geographisch bewegt oder bewegt hat, wird daher vorzugsweise eine Einrichtungsanzahl an unterschiedlichen Sendeeinrichtungen des Mobilfunk-Systems ermittelt, mit denen der Mobilfunk-Empfänger während des ermittelten Fehlerzeitbereichs eine Mobilfunk-Kommunikation aufbaut oder aufgebaut hat. Es wird also ermittelt, mit wie vielen Sendeeinrichtungen sich der Mobilfunk-Empfänger innerhalb des Fehlerzeitbereichs verbunden hat. Wenn die Einrichtungsanzahl eine vorgegebene Maximalanzahl, beispielsweise 2, 3 oder 4, übersteigt, dann kann auf eine räumliche Bewegung des Mobilfunk-Empfängers und damit der Positionsbestimmungsvorrichtung bzw. des Fahrzeugs geschlossen werden. Alternativ kann die Anzahl an durchgeführten Handover-Handlungen, die innerhalb des Fehlerzeitbereiches durchgeführt wurden, ermittelt und mit einer Handover-Maximalanzahl verglichen werden. Die Mobilfunk-Kommunikation kann auf ein Mobilfunkprotokoll wie beispielsweise den verbreiteten GSM-Standard (GSM - Global System for Mobile Communications) basieren.

Das Ermitteln einer geographischen Bewegung der Positionsbestimmungsvorrichtung anhand der Einrichtungsanzahl hat folgenden Vorteil. Wie vorangehend erläutert, soll immer dann, wenn die Positionsbestimmung mittels Auswertung der GNSS-Satellitensignalen durch den GNSS-Empfänger einen Stillstand vorhersagt oder gar keine Position wiedergibt, eine Auswertung der Mobilfunk-Kommunikation erfolgen. Sollte der Stillstand oder das Ausbleiben der Positionsbestimmung seinen Grund darin haben, dass das Fahrzeug durch einen Tunnel fährt, dann wird die ermittelte Einrichtungsanzahl ähnlich gering sein, wie in dem Fall, wenn das Fahrzeug sich tatsächlich nicht bewegt, denn ein Tunnel wird in der Regel durch einen oder wenigen Sendeeinrichtungen eines Mobilfunk-Systems bedient. In einem solchen Fall, in dem das Fahrzeug durch einen Tunnel fährt, wird also keine Diskrepanz zwischen der Positionsbestimmung und der Mobilfunk-Kommunikation auftreten, so dass kein Fehlersignal auftritt. Anders ausgedrückt wird in diesem Fall das Auswerten der Mobilfunk-Kommunikation das Auswerteergebnis liefern, dass sich die Positionsbestimmungsvorrichtung während des ermittelten Fehlerzeitbereichs geographisch nicht bewegt hat, obwohl sich das Fahrzeug tatsächlich im Tunnel bewegt hat.

Eine Alternative zur Überprüfung der Anzahl an Sendeeinrichtungen, mit denen der Mobilfunk-Empfänger kommuniziert hat, besteht wie vorangehend erläutert darin, dass lediglich die Signalstärken jener Sendeeinrichtungen bzw. Sendemasten ermittelt werden, deren Signale der Mobilfunk-Empfänger empfangen kann oder erkennt. Auf diese Weise kann die Anzahl an Sendeeinrichtungen ermittelt werden, an denen der Mobilfunk-Empfänger und damit die Positionsbestimmungsvorrichtung bzw. das Fahrzeug sich vorbei bewegen, wenn eine solche Bewegung tatsächlich vorliegt.

Wie vorangehend erläutert, erfolgt gemäß einer bevorzugten Ausführungsform ein Ermitteln wenigstens einer Einrichtungsanzahl an unterschiedlichen Sendeeinrichtungen des Mobilfunk-Systems mittels Auswerten der ersten und wenigstens der zweiten Mobilfunk-Empfangscharakteristik des Mobilfunk-Empfängers. Daraufhin wird bei dieser Ausführungsform in Abhängigkeit der wenigstens einen ermittelten Einrichtungsanzahl entschieden, dass eine Fehlfunktion der Positionsbestimmungsvorrichtung signalisiert wird. Aus der ersten Mobilfunk-Empfangscharakteristik kann bereits eine Einrichtungsanzahl ermittelt werden. Ebenso kann aus der zweiten Mobilfunk-Empfangscharakteristik eine weitere Einrichtungsanzahl ermittelt werden. Allgemein kann zu jeder erfassten Mobilfunk-Empfangscharakteristik eine zu dieser erfassten Mobilfunk-Empfangscharakteristik zugehörigen Einrichtungsanzahl ermittelt werden. Gemäß einer besonderen Ausführungsform umfasst das Auswerten einen Vergleich der zu unterschiedlichen Mobilfunk-Empfangscharakteristiken ermittelten Einrichtungsanzahlen.

Gemäß einer bevorzugten Ausführungsform ist die ermittelte Einrichtungsanzahl eine Anzahl der unterschiedlichen Sendeeinrichtungen, die in der ersten oder der zweiten Mobilfunk-Empfangscharakteristik enthalten sind. Es handelt sich also um die Anzahl der Sendeeinrichtungen, die entweder in der ersten Mobilfunk-Empfangscharakteristik oder in der zweiten Mobilfunk-Empfangscharakteristik oder in beiden Mobilfunk-Empfangscharakteristiken enthalten sind.

Gemäß einer alternativen bevorzugten Ausführungsform ist die ermittelte Einrichtungsanzahl eine Anzahl der unterschiedlichen Sendeeinrichtungen, die nur in einer der ersten und zweiten Mobilfunk-Empfangscharakteristiken enthalten sind. Insbesondere werden hierbei die Sendeeinrichtungen ausgeschlossen, die in beiden Mobilfunk-Empfangscharakteristiken enthalten sind.

Gemäß einer weiteren alternativen Ausführungsform ist die ermittelte Einrichtungsanzahl eine Anzahl der unterschiedlichen Sendeeinrichtungen, mit denen der Mobilfunk-Empfänger aufgrund des Auswertens der ersten und zweiten Mobilfunk-Empfangscharakteristiken während des ermittelten Fehlerzeitbereichs in eine Mobilfunk-Kommunikation eintritt.

In allen hier genannten Ausgestaltungen kann eine Sendeeinrichtung eines Mobilfunk-Systems aus der ersten und/ oder der zweiten Mobilfunk-Empfangscharakteristik vorteilhafterweise dadurch ermittelt werden, dass ein Signal dieser Sendeeinrichtung in der ersten und/ oder zweiten Mobilfunk-Empfangscharakteristik eine vorgegebene Signalstärke überschreitet.

In Abhängigkeit vom Auswerteergebnis wird anschließend entschieden, eine Fehlfunktion der Positionsbestimmungsvorrichtung zu signalisieren. Zusammengefasst läuft das Verfahren also derart ab, dass ein Stillstand der Positionsbestimmungsvorrichtung und/oder ein Aussetzen der GNSS-Positionsbestimmung vorliegt/vorliegen. Es wird ein Fehlerzeitbereich ermittelt, während dessen dieser Zustand vorliegt. Dann findet ein Erfassen von Mobilfunk-Empfangscharakteristiken und dessen Auswertung statt, anhand dessen Ergebnisses dann entschieden wird, ob eine Signalisierung ausgelöst wird. In diesem Fall liegt eine Diskrepanz zwischen der Positionsbestimmung aufgrund des GNSS-Empfängers und der durch den Mobilfunk-Empfänger angezeigten Bewegung vor.

Gemäß einer bevorzugten Ausführungsform des Verfahrens ist vorgesehen, dass bei jedem Fehlerzeitbereich, für welchen als Auswerteergebnis einer Auswertung der ersten und der zweiten Mobilfunk-Empfangscharakteristiken ermittelt wurde, dass sich während des Fehlerzeitbereichs die Positionsbestimmungsvorrichtung geographisch bewegt hat, ein Fehlerzähler hochgezählt wird, wobei die Entscheidung, dass eine Fehlfunktion einer Positionsbestimmungsvorrichtung signalisiert wird, auch in Abhängigkeit vom Stand des Fehlerzählers erfolgt. Mit anderen Worten, wird nicht unbedingt gleich bei der ersten Diskrepanz zwischen GNSS-basierten und Mobilfunkbasierten Daten eine Fehlfunktion signalisiert. Stattdessen wird in der Entscheidungsfindung auch mit einbezogen, ob und wie oft eine solche Diskrepanz in der Vergangenheit schon aufgetreten ist, beispielsweise innerhalb eines bestimmten Zeitraums.

Vorzugsweise werden die Verfahrensschritte zumindest teilweise in einer Zentraleinrichtung durchgeführt, welche mit der Positionsbestimmungsvorrichtung in Funkverbindung steht. Beispielsweise ist es möglich, dass der ermittelte Fehlerzeitbereich und ein Mobilfunk-Protokoll des Mobilfunk-Empfängers an die Zentraleinrichtung übermittelt werden, wo eine Auswertung der Mobilfunk-Kommunikation erfolgt. Alternativ können auch die mittels des GNSS-Empfängers empfangenen Signale an die Zentraleinrichtung übermittelt werden, so dass auch das Ermitteln des Fehlerzeitbereichs zentral erfolgt. Es ist auch möglich, dass die erfassten Mobilfunk-Empfangscharakteristiken oder empfangenen Mobilfunk-Signale an die Zentraleinrichtung übermittelt werden, so dass die Zentraleinrichtung die die ersten und zweiten Mobilfunk-Empfangscharakteristiken unmittelbar auswertet.

Neben dem beschriebenen Verfahren werden erfindungsgemäß eine Reihe weiterer Komponenten vorgeschlagen, deren Eigenheiten und bevorzugte Ausführungsformen nachfolgend erläutert werden. Dies sind ein Signalisierungssystem, ein Gebührenerhebungssystem, eine Positionsbestimmungsvorrichtung und ein Computerprogrammprodukt. Es wird jedoch darauf hingewiesen, dass vorangehend im Zusammenhang mit dem Verfahren dargelegte Merkmale auch in besonderen Ausführungsformen des Signalisierungssystems, des Gebührenerhebungssystems, der Positionsbestimmungsvorrichtung und des Computerprogrammprodukts zur Anwendung kommen können und dort entsprechende Vorteile entfalten. Dies gilt auch umgekehrt für nachfolgend erläuterte Merkmale, die als Verfahrensmerkmale im erfindungsgemäßen Verfahren entsprechende Vorteile aufweisen.

Das Signalisierungssystem weist die Positionsbestimmungsvorrichtung mit dem GNSS-Empfänger und dem Mobilfunk-Empfänger auf. Zudem ist ein oder sind mehrere Ermittlungsmittel vorgesehen, welche ausgebildet sind, einen Fehlerzeitbereich zu ermitteln. Wie vorangehend erläutert, wird der Fehlerzeitbereich derart bestimmt, dass bei jedem innerhalb des Fehlerzeitbereichs durchgeführten Positionsbestimmungsvorgang eines der folgenden Situationen auftritt: mittels des GNSS-Empfängers wird eine Position ermittelt, wobei festgestellt wird, dass alle innerhalb des Fehlerzeitbereichs ermittelten Positionen einen räumlichen Stillstand der Positionsbestimmungsvorrichtung während des Fehlerzeitbereichs beschreiben. Unter dem Fall a) fallen auch die Situationen, an denen überhaupt kein Satellitenempfang verzeichnet werden kann. Die Situation b) bedeutet, dass eine Auswertung der Gesamtheit der innerhalb des

Fehlerzeitbereichs ermittelten Positionen ergibt, dass ein räumlicher Stillstand vorliegt.

Das Signalisierungssystem weist auch ein Erfassungsmittel auf, welches ausgebildet ist, sowohl die erste Mobilfunk-Empfangscharakteristik als auch die wenigstens eine zweite Mobilfunk-Empfangscharakteristik des Mobilfunk-Empfangs des Mobilfunk-Empfängers während des ermittelten Fehlerzeitbereichs zu erfassen. Mittels eines Entscheidungsmittels wird dann in Abhängigkeit der ersten und der zweiten Mobilfunk-Empfangscharakteristik über das Auslösen einer Signalisierung entschieden.

Weiterhin weist das Signalisierungssystem vorzugsweise ein Auswertungsmittel auf, welches die erfasste erste Mobilfunk-Empfangscharakteristik und die erfasste zweite Mobilfunk-Empfangscharakteristik des Mobilfunk-Empfangs des Mobilfunk-Empfängers auswertet. Als ein Auswerteergebnis wird ermittelt, ob sich die Positionsbestimmungsvorrichtung während des ermittelten Fehlerzeitbereichs geographisch bewegt hat. In Abhängigkeit vom Auswerteergebnis entscheidet dann das Entscheidungsmittel über das Auslösen der Signalisierung über eine Fehlfunktion der Positionsbestimmungsvorrichtung. Das Signalisierungssystem kann insbesondere Teil eines Gebührenerhebungssystems sein.

Gemäß einer kompakten Ausführungsform ist das Auswertungsmittel oder das Entscheidungsmittel in der Positionsbestimmungsvorrichtung angeordnet. Es können auch sowohl das Auswertungsmittel als auch das Entscheidungsmittel in der Positionsbestimmungsvorrichtung angeordnet sein. Die Auswertung der Mobilfunk-Kommunikation und/oder das Treffen der Entscheidung aufgrund des Auswerteergebnisses erfolgen in diesem Fall in der Positionsbestimmungsvorrichtung. Dies ist insbesondere dann sinnvoll, wenn die Überwachung der im Straßenverkehr befindlichen Positionsbestimmungsvorrichtungen möglichst dezentral erfolgen soll.

Alternativ kann vorgesehen sein, dass die Positionsbestimmungsvorrichtung das Ermittlungsmittel, das Erfassungsmittel und eine Funkvorrichtung aufweist, welche ausgebildet ist, den ermittelten Fehlerzeitbereich per Funk an eine Zentraleinrichtung zu übermitteln. Ferner kann die Funkvorrichtung ausgebildet sein, die erfassten Mobilfunk-Empfangscharakteristiken, ein Empfangsprotokoll über alle empfangenen Mobilfunk-Signale, aus denen die sie sendenden Sendemasten erkennbar sind, und / oder ein Kommunikationsprotokoll des Mobilfunk-Empfängers per Funk an die Zentraleinrichtung zu übermitteln. In diesem Fall weist die Zentraleinrichtung das Entscheidungsmittel und gegebenenfalls das Auswertungsmittel auf. Das Empfangsprotokoll kann die empfangenen Mobilfunk-Signale selbst oder die Kennungen der erkennbaren oder erkannten Sendemasten sowie die Zeitpunkte enthalten, an denen die Mobilfunk-Signale empfangen wurden. Das Kommunikationsprotokoll kann eine Aufstellung sämtlicher Verbindungen enthalten, welche der Mobilfunk-Empfänger innerhalb eines bestimmten Zeitbereiches unterhalten hat. Insbesondere kann aus dieser Aufstellung, welche in Form einer einfachen Liste oder Tabelle organisiert sein kann, entnommen werden, mit welchen Sendeeinrichtungen der Mobilfunk-Empfänger wann und wie lange in Verbindung stand.

Die Zentraleinrichtung kann als eine Anordnung aus einem oder mehreren Rechnern ausgebildet sein, welche geographisch verteilt aufgestellt sind. Vorzugsweise kann eine Zentraleinrichtung über Funk mit mehreren Positionsbestimmungsvorrichtungen verbunden sein. Eine zumindest teilweise zentrale Auswertung der Mobilfunk-Empfangscharakteristiken und darauf basierte Entscheidungsfindung hat den Vorteil, dass der Auswertealgorithmus auch zentral überarbeitet, optimiert und gewartet werden kann. Die Funkvorrichtung kann sich für die Kommunikation zwischen der Positionsbestimmungsvorrichtung und der Zentraleinrichtung eines Mobilfunkprotokolls bedienen, wie beispielsweise des verbreiteten GSM-Standards (GSM - Global System for Mobile Communications).

Bevorzugterweise weist die Positionsbestimmungsvorrichtung eine Signalisierungsvorrichtung auf und ist ausgebildet, bei positiver Entscheidung des Entscheidungsmittels über das Auslösen der Signalisierung die Signalisierung auszulösen. Die Signalisierungsvorrichtung kann insbesondere Leuchtdioden (LEDs), ein Display und/oder andere optische oder akustische Signalgeber umfassen, welche in der Lage sind, die Signalisierung dem Fahrzeugführer zu vermitteln. Alternativ oder zusätzlich kann die Signalisierungsvorrichtung Funkmittel aufweisen, über die ein Funksignal an eine externe Einrichtung übertragen wird. In diesem Fall gilt das Aussenden des Funksignals als Signalisierung. In der externen Einrichtung kann die Signalisierung dazu führen, dass eine Nachricht an den Fahrzeughalter versandt wird und/oder dass andere notwendige Schritte zur Behebung des Problems der Fehlfunktion eingeleitet werden.

Das vorangehend beschriebene Verfahren kann gänzlich oder in Teilen in einem Computerprogrammprodukt verwirklicht sein, der in einem Speicher und/oder einem Prozessor der Positionsbestimmungsvorrichtung abgelegt ist. Das Computerprogrammprodukt kann auch zumindest teilweise auf der Zentraleinrichtung abgelegt sein, sofern eine solche vorgesehen ist.

Die Erfindung wird im Folgenden anhand von Ausführungsbeispielen unter Bezugnahme auf die Figuren erläutert. Hierbei zeigen:
- Fig. 1: eine schematische Darstellung einer erfindungsgemäßen Positionsbestimmungsvorrichtung;
- Fig. 2: eine schematische Darstellung eines erfindungsgemäßen Signalisierungssystems mit einer Positionsbestimmungsvorrichtung und einer Zentraleinrichtung;
- Fig. 3: eine schematische Darstellung einer Bewegung eines Fahrzeugs innerhalb eines zellulären Mobilfunknetzes gemäß einer ersten Ausführungsform;
- Fig. 4: eine schematische Darstellung einer Bewegung eines Fahrzeugs innerhalb eines zellulären Mobilfunknetzes gemäß einer zweiten Ausführungsform; und
- Fig. 5: eine schematische Darstellung einer Bewegung eines Fahrzeugs innerhalb eines zellulären Mobilfunknetzes gemäß Fig. 3 gemäß einer dritten Ausführungsform.

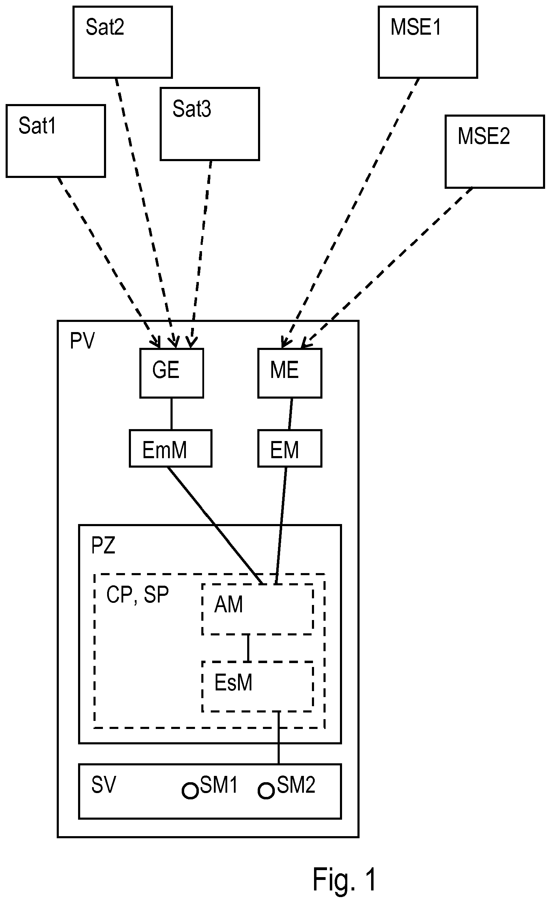

In der Fig. 1 wird eine Positionsbestimmungsvorrichtung PV gemäß einer erfindungsgemäßen Ausführungsform schematisch dargestellt. Die Positionsbestimmungsvorrichtung PV weist einen GNSS-Empfänger GE auf. Hier handelt es sich insbesondere um einen GPS-Empfänger. Der GNSS-Empfänger GE weist eine hier nicht dargestellte Empfangsantenne auf und ist ausgebildet, Satellitensignale von GNSS-Navigationssatelliten zu empfangen, aus den Satellitensignalen die darin übermittelten Satellitendaten zu extrahieren und diese zu analysieren, um eine aktuelle Position der

Positionsbestimmungsvorrichtung PV zu ermitteln bzw. zu errechnen. Hierbei ist es unerheblich, ob die Analyse der Satellitendaten im GNSS-Empfänger GE erfolgt, oder ob die Satellitendaten zur Analyse zu einem weiteren in Fig. 1 nicht dargestellten Modul innerhalb oder außerhalb der Positionsbestimmungsvorrichtung PV weitergeleitet werden.

Die Positionsbestimmungsvorrichtung PV weist ein Ermittlungsmittel EmM auf, welches mit dem GNSS-Empfänger GE verbunden und ausgebildet ist, einen Fehlerzeitbereich zu ermitteln, innerhalb dessen ein vorgegebener Qualitätsschwellwert für die Positionsbestimmung unterschritten wird (nicht erfindungsgemäß), oder innerhalb dessen ein räumlicher, d.h. geographischer, Stillstand der Positionsbestimmungsvorrichtung PV erkannt oder ermittelt wird (erfindungsgemäß). Das Ermittlungsmittel EmM kann selbst Teil des GNSS-Empfängers GE sein, wird aber hier und in der nachfolgenden Figur zur besseren Veranschaulichung als eigenständiges Modul dargestellt.

In der Positionsbestimmungsvorrichtung PV ist zudem ein Mobilfunk-Empfänger ME angeordnet, der Signale von Mobilfunk-Sendeeinrichtungen MSE1, MSE2 eines Mobilfunk-Systems empfängt. Der Mobilfunk-Empfänger ME ist mit einem Erfassungsmittel EM verbunden, welcher ausgebildet ist, aus den empfangenen Signalen eine erste und wenigstens eine zweite Mobilfunk-Empfangscharakteristik zu erfassen. Der Mobilfunk-Empfänger ME kann auch dazu eingesetzt werden, dass die Positionsbestimmungsvorrichtung PV mit einer Zentraleinheit bzw. einem zentralen Server kommuniziert. Alternativ kann jedoch der Mobilfunk-Empfänger ME ein Empfangs- oder Kommunikationsmodul sein, welcher ausschließlich dazu bestimmt ist, wie hier beschrieben die Mobilfunk-Empfangscharakteristiken zu erfassen, damit darauf basierend ermittelt werden kann, ob sich die Positionsbestimmungsvorrichtung während des ermittelten Fehlerzeitbereichs geographisch bewegt hat.

Weiterhin weist die Positionsbestimmungsvorrichtung PV einen Prozessor PZ mit einem Speicher SP auf, in dem ein Computerprogrammprodukt CP hinterlegt ist. Das Computerprogrammprodukt CP befindet sich in dem Speicher SP und wird zeitweise im und vom Prozessor PZ ausgeführt. Deshalb werden sowohl das Computerprogrammprodukt CP als auch der Speicher SP als ein Block im Prozessor PZ gestrichelt dargestellt. Als Teil des Computerprogrammprodukts CP sind im Speicher SP abgelegt bzw. laufen auf dem Prozessor PZ: Ein Auswertungsmittel AM und ein Entscheidungsmittel EsM. Diese sind ausgebildet, die erfassten eine Mobilfunk-Empfangscharakteristiken des Mobilfunk-Empfangs des Mobilfunk-Empfängers ME auszuwerten und aufgrund eines Ergebnisses der Auswertung zu entscheiden, ob eine Signalisierung ausgelöst wird oder nicht. Die Signalisierung erfolgt dann, wenn aufgrund der Auswertung festgestellt bzw. ermittelt wurde, dass eine Fehlfunktion der Positionsbestimmungsvorrichtung PV vorliegt.

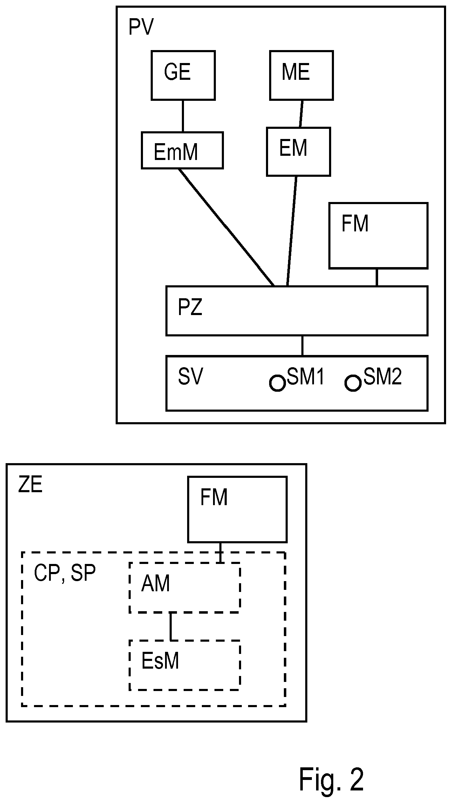

In der Fig. 2 wird eine alternative Ausführungsform der Positionsbestimmungsvorrichtung PV zusammen mit einer Zentraleinrichtung ZE schematisch dargestellt. Während die in Fig. 2 dargestellte Positionsbestimmungsvorrichtung PV weiterhin den GNSS-Empfänger GE, den Mobilfunk-Empfänger ME, das Erfassungsmittel EM und das Ermittlungsmittel EmM aufweist, sowie einen Prozessor zum Steuern der Komponenten der Positionsbestimmungsvorrichtung PV, sind das Auswertungsmittel AM und das Entscheidungsmittel EsM in Form eines Computerprogrammprodukts CP im Speicher SP der Zentraleinrichtung ZE abgelegt und laufen bzw. wirken dort.

Die Mobilfunk-Empfangscharakteristiken werden von der Positionsbestimmungsvorrichtung PV mittels eines Funkmittels FM ausgesendet und mittels eines weiteren Funkmittels FM an der Zentraleinrichtung ZE empfangen.

Über die Funkmittel FM erfolgt auch eine Übermittlung des Ergebnisses der Auswertung der Mobilfunk-Empfangscharakteristiken in der Zentraleinrichtung ZE zurück an die Positionsbestimmungsvorrichtung PV. Diese weist neben dem Funkmittel FM auch eine Signalisierungsvorrichtung SV mit Signalmitteln SM1, SM2 auf. Während das erste Signalmittel SM1 ein optischer Signalgeber wie beispielsweise eine LED ist, kann es sich bei dem zweiten Signalmittel SM2 um einen akustischen Signalgeber handeln. Ist das Ergebnis der Auswertung der Mobilfunk-Empfangscharakteristiken, dass eine Signalisierung ausgelöst werden muss, dann wird dies mittels der Funkmittel FM von der Zentraleinrichtung ZE an die Positionsbestimmungsvorrichtung PV mitgeteilt und daraufhin mittels der Signalmittel SM1, SM2 dem Benutzer der Positionsbestimmungsvorrichtung PV signalisiert.

Bei dem Benutzer der Positionsbestimmungsvorrichtung PV handelt es sich insbesondere um einen Fahrzeugführer oder Fahrzeughalter eines Fahrzeugs, in dem die Positionsbestimmungsvorrichtung PV als On-Board Unit (OBU) bzw. Fahrzeuggerät (FzG) oder als Teil eines solchen Gerätes installiert ist. Die Positionsbestimmungsvorrichtung PV ist zudem Teil eines Gebührenerhebungssystems. Sie ist ausgebildet, die mittels des GNSS-Empfängers empfangenen Satellitensignale zu empfangen und fortlaufend die Position des Fahrzeuges zu berechnen. Auf Basis der berechneten Positionen kann ermittelt werden, welche gebührenpflichtigen Straßen, Straßenabschnitte, Verkehrsstrukturen etc. durch das Fahrzeug befahren wurden, um dies dem Fahrzeughalter in Rechnung stellen zu können.

Mittels der Signalisierungsvorrichtung SV wird dem Fahrzeugführer oder Fahrzeughalter signalisiert, dass eine Fehlfunktion der Positionsbestimmungsvorrichtung PV vorliegt. Die Positionsbestimmungsvorrichtung PV gemäß Fig. 1 ist somit Teil eines erfindungsgemäßen Signalisierungssystems. Ebenso sind die Positionsbestimmungsvorrichtung PV und die Zentraleinrichtung ZE aus der Fig. 2 Teile eines erfindungsgemäßen Signalisierungssystems gemäß einer alternativen Ausführungsform. Die in Fig. 2 gezeigte Zentraleinrichtung ZE kann als Teil des Signalisierungssystems mit mehreren Positionsbestimmungsvorrichtungen (nicht dargestellt) in Funkkontakt stehen, die jeweils in einem Fahrzeug angeordnet sind.

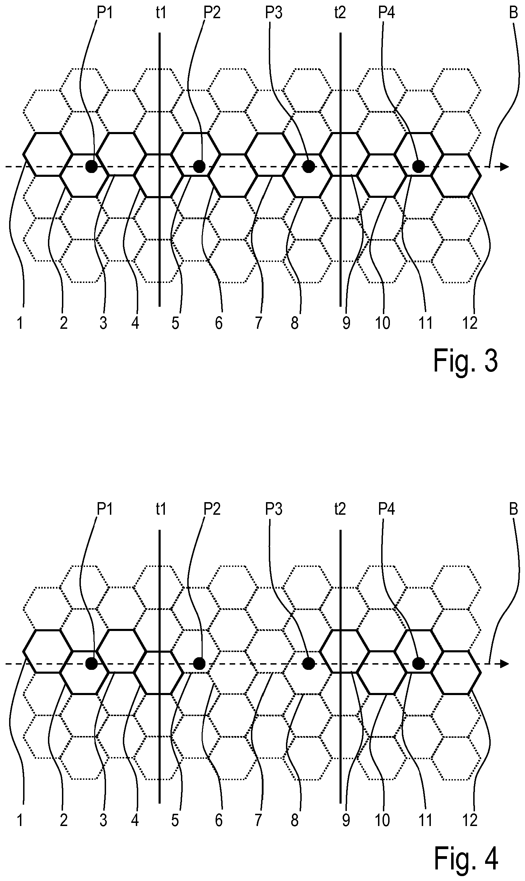

Das erfindungsgemäße Verfahren zur Signalisierung der Fehlfunktion der Positionsbestimmungsvorrichtung PV gemäß einer ersten und einer zweiten Ausführungsform, bei denen die Entscheidung über das Auslösen einer Signalisierung aufgrund einer Auswertung einer bestehenden Mobilfunk-Kommunikation getroffen wird, wird in den Fig. 3 und 4 anhand eines schematischen Umgebungsplans nachfolgend erläutert. Das hier beschriebene Verfahren kann mittels der Positionsbestimmungsvorrichtungen PV in der integrierten Ausgestaltung gemäß Fig. 1 oder mittels des als verteiltes System ausgebildeten Signalisierungssystems mit der Positionsbestimmungsvorrichtung PV und der Zentraleinrichtung ZE gemäß Fig. 2 durchgeführt werden.

Fig. 3 zeigt schematisch die Aufteilung einer geographischen Umgebung in einzelne Kommunikationszellen 1, 2, 3, ... eines zellulären Mobilfunknetzes. Jeder Zelle 1, 2, 3, ... ist eine Mobilfunk-Sendeeinrichtung, also ein Sendemast, des Mobilfunk-Systems zugeordnet, mit welcher der Mobilfunk-Empfänger ME bevorzugt kommuniziert, wenn er sich innerhalb der zugehörigen Zelle 1, 2, 3, ... befindet. Die Sendeeinrichtungen sind in den Figuren nicht dargestellt. Ein Bewegungspfad B eines Fahrzeugs (nicht dargestellt) wird in der Fig. 3 mittels eines gestrichelten Pfeils angedeutet. Die Zellen, 1, 2, 3, ..., welche durch das Fahrzeug auf dem Bewegungspfad B durchquert werden, weisen in der Fig. 3 eine dicke Umrandung auf und sind mit Bezugsnummern versehen, während die übrigen Zellen gepunktete Umrandungen aufweisen und der Übersicht halber nicht nummeriert sind. Einzelne Positionen P1, P2, P3, P4 des Fahrzeugs auf seinem Bewegungspfad B sind mittels gefüllten Kreisen gekennzeichnet. Das Fahrzeug ist mit einer Positionsbestimmungsvorrichtung PV gemäß Fig. 1 oder Fig. 2 ausgestattet.

Die Fig. 3 beschreibt eine Situation, in welcher der GNSS-Empfänger GE der im Fahrzeug installierten Positionsbestimmungsvorrichtung PV während der Fahrt entlang des Bewegungspfads B innerhalb eines Fehlerzeitbereichs kein GNSS-Signal empfängt. Dieser Fehlerzeitbereich erstreckt sich zwischen zwei Zeitpunkten, dem Fehlerzeitbereichsbeginn t1 und dem Fehlerzeitbereichsende t2, welche in der Fig. 3 als senkrechte Linien angedeutet sind. Die Kreuzungspunkte dieser Linien mit dem Bewegungspfad B sind die Positionen des Fahrzeugs an den jeweiligen Zeitpunkten t1, t2. Das bedeutet, dass der GNSS-Empfänger GE in den Positionen P2 und P3 keine Positionsbestimmung durchführen kann, während in den Positionen P1 und P4 die Positionsbestimmung problemlos erfolgt. Dieser Fehlerzeitbereich wird mittels des in Fig. 1 dargestellten Ermittlungsmittels EmM ermittelt, beispielsweise indem nach Wegfall des GNSS-Signals der Zeitpunkt als Fehlerzeitbereichsbeginn t1 registriert und in regelmäßigen Abständen der GNSS-Empfänger abgefragt wird. Ist das GNSS-Signal an einem späteren Zeitpunkt wieder empfangbar, dann wird dieser oder ein früherer Zeitpunkt als Fehlerzeitbereichsende t2 registriert.

Nachdem der Fehlerzeitbereich ermittelt wurde, erfolgt die Auswertung der Mobilfunk-Kommunikation. Aufgrund der Bewegung durch die Zellen 1, 2, 3, ... verbindet sich der Mobilfunk-Empfänger ME nacheinander mit den zugehörigen Sendeeinrichtungen. Innerhalb des Fehlerzeitbereichs erfolgt eine Verbindung jeweils zu mindestens 6 Sendeeinrichtungen, nämlich zu den Sendeeinrichtungen der Zellen 4, 5, 6, 7, 8 und 9. Möglicherweise werden weitere Sendeeinrichtungen angesteuert, deren Zellen an den genannten Zellen angrenzen. Das Auswertemittel AM wertet also die Mobilfunk-Kommunikation aus und registriert, dass während des Fehlerzeitbereichs Kommunikation mit zumindest 6 Sendeeinrichtungen stattgefunden haben, die Einrichtungsanzahl also mindestens 6 ist. Ist für die Einrichtungsanzahl beispielsweise eine vorgegebene Maximalanzahl von 3 oder 4 vorgegeben, dann übersteigt die ermittelte Einrichtungsanzahl diese Maximalanzahl. In diesem Fall löst das Entscheidungsmittel EsM nun eine Signalisierung aus, die auf eine Fehlfunktion der Positionsbestimmungsvorrichtung PV hinweist, die darin besteht, dass sich Positionsbestimmungsvorrichtung während des Fehlerzeitbereiches nachweislich bewegt hat.

Ein anderer Fall wird anhand der Fig. 4 beschrieben. Auch hier bewegt sich das Fahrzeug entlang eines Bewegungspfads B, welcher durch die nummerierten Zellen 1, 2, 3, ... führt. Die Situation unterscheidet sich jedoch von der in Fig. 3 dargestellten darin, dass zwischen den beiden senkrechten Linien ein Tunnel (nicht dargestellt) angeordnet ist. Das bedeutet, zum Zeitpunkt t1 dringt das Fahrzeug in den Tunnel ein und verlässt diesen zum Zeitpunkt t2. Auch hier wird das GNSS-Signal während des Fehlerzeitbereichs zwischen t1 und t2 mittels des GNSS-Empfängers nicht empfangen. Anders als im vorangehend beschriebenen Fall kann jedoch auch der Mobilfunk-Empfänger ME sich während der Fahrt nicht mit den Sendeeinrichtungen der Zellen 5, 6, 7 und 8 verbinden, da der Mobilfunk-Empfänger ME durch den Tunnel abgeschirmt wird. Lediglich die Kommunikation mit den Sendeeinrichtungen der Zelle 4 am Tunneleingang und der Zelle 9 am Tunnelausgang findet statt.

Ist nun für die Einrichtungsanzahl wie im vorangehenden Fall eine vorgegebene Maximalanzahl von 3 oder 4 vorgegeben, dann übersteigt die ermittelte Einrichtungsanzahl die Maximalanzahl im Falle der Tunnelfahrt nicht. In diesem Fall löst das Entscheidungsmittel EsM keine Signalisierung einer Fehlfunktion der Positionsbestimmungsvorrichtung PV aus, weil der Nachweis einer ausreichenden Bewegung während des Fehlerzeitbereiches mangels ausreichender ermittelter Einrichtungsanzahl nicht erbracht wurde.

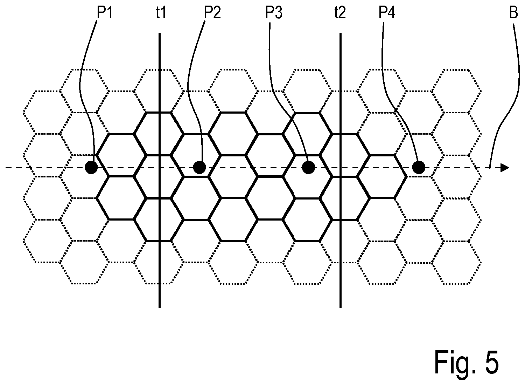

Das erfindungsgemäße Verfahren zur Signalisierung der Fehlfunktion der Positionsbestimmungsvorrichtung PV gemäß einer dritten Ausführungsform, bei der die Entscheidung über das Auslösen einer Signalisierung aufgrund einer Auswertung lediglich der erkannten Sendeeinheiten getroffen wird, wobei der Aufbau einer Mobilfunk-Kommunikation nicht notwendig ist, wird anhand der Fig. 5 erläutert.

Fig. 5 stellt hinsichtlich der Verteilung der Kommunikationszellen und dem Bewegungspfad B eines Fahrzeugs durch die Kommunikationszellen die gleiche Situation bzw. den gleichen Ablauf dar, wie in der Fig. 3 dargestellt. Der Übersicht halber sind die Kommunikationszellen in der Fig. 5 nicht nummeriert. Im Gegensatz zu der vorangehend beschriebenen Ausführungsform des erfindungsgemäßen Verfahrens wird bei der anhand der Fig. 5 beschriebenen alternativen Ausführungsform keine Mobilfunk-Kommunikation zwischen dem Mobilfunk-Empfänger ME und den zu den Kommunikationszellen gehörenden Sendeeinheiten aufgebaut, um aufgrund der sich ändernden Mobilfunk-Kommunikation, insbesondere aufgrund der dauernd stattfindenden Handover-Operationen, eine Bewegung des Fahrzeugs innerhalb des Fehlerzeitbereichs festzustellen.

Wie in der Fig. 3, erstreckt sich auch in der Fig. 5 der mittels des GNSS-Empfängers GE ermittelte Fehlerzeitbereich zwischen zwei Zeitpunkten, dem Fehlerzeitbereichsbeginn t1 und dem Fehlerzeitbereichsende t2. Innerhalb dieses Fehlerzeitbereichs werden eine erste Mobilfunk-Empfangscharakteristik und wenigstens eine zweite Mobilfunk-Empfangscharakteristik erfasst. Beispielsweise wird zu dem Zeitpunkt, an dem sich das Fahrzeug an der Position P2 befindet, die erste Mobilfunk-Empfangscharakteristik und zu dem Zeitpunkt, an dem sich das Fahrzeug an der Position P3 befindet, die zweite Mobilfunk-Empfangscharakteristik erfasst. Anschließend erfolgt die Entscheidung, dass eine Fehlfunktion einer Positionsbestimmungsvorrichtung signalisiert wird, in Abhängigkeit der ersten und wenigsten der zweiten Mobilfunk- Empfangscharakteristik.

Gemäß einer bevorzugten Ausführungsform werden nun innerhalb des Fehlerzeitbereichs fortlaufend Mobilfunk-Empfangscharakteristiken erfasst, so dass sämtliche während des Fehlerzeitbereichs durch den Mobilfunk-Empfänger erkennbaren Sendeeinheiten bzw. Sendemasten ermittelt werden. In der Fig. 5 sind die Kommunikationszellen, welche diesen erkennbaren Sendeeinheiten zugeordnet sind, mit durchgehenden dicken Umrandungen markiert, während alle anderen Kommunikationszellen mit gestrichelten Umrandungen dargestellt sind. Es handelt sich in dieser schematischen Darstellung um 18 erkennbare Sendeeinheiten. Es ist darauf hinzuweisen, dass zu dem Zeitpunkt, wenn sich das Fahrzeug in der Position P2 befindet, durch den Mobilfunk-Empfänger möglicherweise nur 6 Sendeeinheiten erkennbar sind. Das gleiche könnte für die Position P3 gelten, wobei es sich dann um ganz andere erkennbare Sendeeinheiten handelt. Während der Fahrt innerhalb des Fehlerzeitbereiches ändern sich die Mobilfunk-Empfangscharakteristiken fortlaufend, so dass auch die erkennbaren Sendeeinheiten fortlaufend wechseln. In der Summe sind jedoch innerhalb des Fehlerzeitbereiches die hervorgehobenen 18 Sendeeinheiten erkennbar. Ist nun der Anzahlschwellwert beispielsweise auf 8 erkennbare Sendeeinheiten festgelegt, dann wird in der hier beschriebenen Situation dieser Anzahlschwellwert innerhalb des Fehlerzeitbereiches überschritten, so dass korrekterweise eine Fehlfunktion der Positionsbestimmungsvorrichtung signalisiert wird.

Allen drei beschriebenen Ausführungsformen ist in einer nicht erfindungsgemäßen Variante gemein, dass der Fehlerzeitbereich für Positionsbestimmungsvorgänge, zu denen auch die Positionsbestimmungsversuche ohne Positionsbestimmungserfolg zählen, bestimmt wird, bei denen eine mittels des GNSS-Empfängers GE ermittelte Positionsbestimmungsqualität des GNSS-Empfangs einen vorgegebenen GNSS-Qualitätsschwellwert unterschreitet, insbesondere keine Position bestimmt werden kann, weil keine ausreichende Anzahl von Satellitensignalen zur Positionsbestimmung empfangen werden konnten.

In einer erfindungsgemäßen Variante lassen sich die drei beschriebenen Ausführungsbeispiele auch auf den Fall übertragen, dass der Fehlerzeitbereich für Positionsbestimmungsvorgänge bestimmt wird, bei denen jeweils mittels des GNSS-Empfängers GE eine Position ermittelt wird, wobei festgestellt wird, dass alle innerhalb des Fehlerzeitbereichs ermittelten Positionen einen räumlichen Stillstand der Positionsbestimmungsvorrichtung PV während des Fehlerzeitbereichs beschreiben.

Neben dem Unterschied, dass der Fehlerzeitbereich dabei aufgrund anderer Merkmale von Ergebnissen der Positionsbestimmungsvorgänge bestimmt wird, bleiben die in den drei Ausführungsformen beschriebenen Auswertungen der im Fehlerzeitbereich erfassten Mobilfunk-Empfangscharakteristiken und die Entscheidungen zur Signalisierung prinzipiell gleich.

### Bezugszeichenliste:

- AM: Auswertungsmittel
- CP: Computerprogrammprodukt
- EM: Erfassungsmittel
- EmM: Ermittlungsmittel
- EsM: Entscheidungsmittel
- FM: Funkmittel
- GE: GNSS-Empfänger
- ME: Mobilfunk-Empfänger
- MSE1, MSE2: Mobilfunk-Satelliten
- PV: Positionsbestimmungsvorrichtung
- PZ: Prozessor
- Sat1, Sat2, Sat3: GNSS-Satelliten
- SM1: erstes Signalmittel
- SM2: zweites Signalmittel
- SP: Speicher
- SV: Signalisierungsvorrichtung
- ZE: Zentraleinrichtung

- t1: Fehlerzeitbereichsbeginn
- t2: Fehlerzeitbereichsende
- P1, P2, P3, P4: Fahrzeugpositionen
- B: Bewegungspfad
- 1, 2, 3, ...: Zellen, Kommunikationszellen des Mobilfunknetzes

## Patentansprüche

1. Verfahren zur Signalisierung einer Fehlfunktion einer Positionsbestimmungsvorrichtung (PV), welche einen GNSS-Empfänger (GE) und einen Mobilfunk-Empfänger (ME) aufweist, **gekennzeichnet durch** folgende Verfahrensschritte:
- Ermitteln eines Fehlerzeitbereichs, derart, dass bei jedem von mehreren innerhalb des Fehlerzeitbereichs durchgeführten Positionsbestimmungsvorgängen entweder
a) eine mittels des GNSS-Empfängers (GE) ermittelte Positionsbestimmungsqualität des GNSS-Empfangs einen vorgegebenen GNSS-Qualitätsschwellwert unterschreitet
oder
b) mittels des GNSS-Empfängers (GE) eine Position ermittelt wird, wobei festgestellt wird, dass alle innerhalb des Fehlerzeitbereichs ermittelten Positionen einen räumlichen Stillstand der Positionsbestimmungsvorrichtung (PV) während des Fehlerzeitbereichs beschreiben;
- Erfassen sowohl einer ersten Mobilfunk-Empfangscharakteristik als auch wenigstens einer zweiten Mobilfunk-Empfangscharakteristik des Mobilfunk-Empfangs des Mobilfunk-Empfängers (ME) während des ermittelten Fehlerzeitbereichs, wobei die erste Mobilfunk-Empfangscharakteristik zu einem früheren Zeitpunkt und die zweite Mobilfunk-Empfangscharakteristik zu einem späteren Zeitpunkt innerhalb des Fehlerzeitbereiches gemessen wird; und
- Entscheiden, in Abhängigkeit der ersten und wenigstens der zweiten Mobilfunk-Empfangscharakteristik, dass eine Fehlfunktion einer Positionsbestimmungsvorrichtung signalisiert wird, wenn eine Auswertung der erfassten ersten und zweiten Mobilfunk-Empfangscharakteristiken ergibt, dass sich die Positionsbestimmungsvorrichtung während des ermittelten Fehlerzeitbereiches geographisch bewegt hat.

2. Verfahren nach Anspruch 1, **dadurch gekennzeichnet, dass** festgestellt wird, dass alle innerhalb des Fehlerzeitbereichs ermittelten Positionen einen räumlichen Stillstand der Positionsbestimmungsvorrichtung (PV) während des Fehlerzeitbereichs beschreiben, wenn:
a) die innerhalb des Fehlerzeitbereichs mittels des GNSS-Empfängers (GE) ermittelten Positionen paarweise um nicht mehr als eine vorgegebene Maximaldistanz voneinander abweichen; oder
b) die innerhalb des Fehlerzeitbereichs mittels des GNSS-Empfängers (GE) ermittelten Positionen sich alle innerhalb eines vorgegebenen Raumintervalls um einen Raumintervall-Mittelpunkt befinden.

3. Verfahren nach Anspruch 1 oder 2, **gekennzeichnet durch**:
- Ermitteln wenigstens einer Einrichtungsanzahl an unterschiedlichen Sendeeinrichtungen eines Mobilfunk-Systems mittels Auswerten der ersten und wenigstens der zweiten Mobilfunk-Empfangscharakteristik des Mobilfunk-Empfängers (ME), und
- Entscheiden, in Abhängigkeit der wenigstens einen ermittelten Einrichtungsanzahl, dass eine Fehlfunktion einer Positionsbestimmungsvorrichtung signalisiert wird.

4. Verfahren nach Anspruch 3 **dadurch gekennzeichnet, dass** die Einrichtungsanzahl eine der folgenden Anzahlen ist:
a) Anzahl der unterschiedlichen Sendeeinrichtungen, die in der ersten oder der zweiten Mobilfunk-Empfangscharakteristik enthalten sind;
b) Anzahl der unterschiedlichen Sendeeinrichtungen, die nur in einer der ersten und zweiten Mobilfunk-Empfangscharakteristiken enthalten sind;
c) Anzahl der unterschiedlichen Sendeeinrichtungen, mit denen der Mobilfunk-Empfänger aufgrund des Auswertens der ersten und zweiten Mobilfunk-Empfangscharakteristiken während des ermittelten Fehlerzeitbereichs in eine Mobilfunk-Kommunikation eintritt.

5. Verfahren nach Anspruch 3 oder 4 **dadurch gekennzeichnet, dass**
eine Sendeeinrichtung eines Mobilfunk-Systems aus der ersten und/ oder zweiten Mobilfunk-Empfangscharakteristik dadurch ermittelt wird, dass ein Signal dieser Sendeeinrichtung in der ersten und/ oder zweiten Mobilfunk-Empfangscharakteristik eine vorgegebene Signalstärke übersch reitet.

6. Verfahren nach einem der vorangehenden Ansprüche, **dadurch gekennzeichnet, dass** für jeden ermittelten Fehlerzeitbereich in Abhängigkeit der ersten und wenigstens der zweiten Mobilfunk-Empfangscharakteristik ein Fehlerzähler hochgezählt wird, wobei die Entscheidung, dass eine Fehlfunktion einer Positionsbestimmungsvorrichtung (PV) signalisiert wird, auch in Abhängigkeit vom Stand des Fehlerzählers erfolgt.

7. Verfahren nach einem der vorangehenden Ansprüche, **dadurch gekennzeichnet, dass** die Verfahrensschritte zumindest teilweise in einer Zentraleinrichtung (ZE) durchgeführt werden, welche mit der Positionsbestimmungsvorrichtung (PV) in Funkverbindung steht.

8. Signalisierungssystem zur Signalisierung einer Fehlfunktion einer Positionsbestimmungsvorrichtung (PV), welche einen GNSS-Empfänger (GE) und einen Mobilfunk-Empfänger (ME) aufweist, aufweisend:
- die Positionsbestimmungsvorrichtung (PV) mit dem GNSS-Empfänger (GE) und dem Mobilfunk-Empfänger (ME),
- ein Ermittlungsmittel (EmM), welches ausgebildet ist, einen Fehlerzeitbereich derart zu ermitteln, dass bei jedem von mehreren innerhalb des Fehlerzeitbereichs durchgeführten Positionsbestimmungsvorgängen entweder
a) eine mittels des GNSS-Empfängers (GE) ermittelte Positionsbestimmungsqualität des GNSS-Empfangs einen vorgegebenen GNSS-Qualitätsschwellwert unterschreitet
oder
b) mittels des GNSS-Empfängers (GE) eine Position ermittelt wird, wobei festgestellt wird, dass alle innerhalb des Fehlerzeitbereichs ermittelten Positionen einen räumlichen Stillstand der Positionsbestimmungsvorrichtung (PV) während des Fehlerzeitbereichs beschreiben;
- ein Auswertungsmittel (AM), welches die erfasste erste und zweite Mobilfunk-Empfangscharakteristik auswertet und als Auswerteergebnis ermittelt, ob sich die Positionsbestimmungsvorrichtung während des ermittelten Fehlerzeitbereiches geographisch bewegt hat,
- ein Erfassungsmittel (EM), welches ausgebildet ist, sowohl eine erste Mobilfunk-Empfangscharakteristik als auch wenigstens eine zweite Mobilfunk-Empfangscharakteristik des Mobilfunk-Empfangs des Mobilfunk-Empfängers (ME) während des ermittelten Fehlerzeitbereichs derart zu erfassen, dass die erste Mobilfunk-Empfangscharakteristik zu einem früheren Zeitpunkt und die zweite Mobilfunk-Empfangscharakteristik zu einem späteren Zeitpunkt innerhalb des Fehlerzeitbereiches gemessen wird, und
- ein Entscheidungsmittel (EsM), welches ausgebildet ist, in Abhängigkeit der ersten und wenigsten der zweiten Mobilfunk-Empfangscharakteristik über das Auslösen einer Signalisierung einer Fehlfunktion der Positionsbestimmungsvorrichtung (PV) zu entscheiden, indem es in Abhängigkeit von dem Auswerteergebnis über das Auslösen der Signalisierung entscheidet.

9. Signalisierungssystem nach Anspruch 8, **dadurch gekennzeichnet, dass** das Entscheidungsmittel (EsM) in der Positionsbestimmungsvorrichtung (PV) angeordnet ist.

10. Signalisierungssystem nach Anspruch 8, **dadurch gekennzeichnet, dass** die Positionsbestimmungsvorrichtung (PV) die Ermittlungsmittel (EmM) und eine Funkvorrichtung aufweist, welche ausgebildet ist, den ermittelten Fehlerzeitbereich und ein Kommunikationsprotokoll des Mobilfunk-Empfängers (ME) per Funk an eine Zentraleinrichtung (ZE) zu übermitteln, wobei die Zentraleinrichtung (ZE) das Erfassungsmittel (EM) und das Entscheidungsmittel (EsM) aufweist.

11. Signalisierungssystem nach einem der Ansprüche 8 bis 10, **dadurch gekennzeichnet, dass** die Positionsbestimmungsvorrichtung (PV) eine Signalisierungsvorrichtung (SV) aufweist und ausgebildet ist, bei positiver Entscheidung des Entscheidungsmittels (EsM) über das Auslösen der Signalisierung eine Signalisierung der Signalisierungsvorrichtung (SV) auszulösen.

12. Gebührenerhebungssystem mit einem Signalisierungssystem gemäß einem der Ansprüche 8 bis 11 und einer Gebührenberechnungseinrichtung, welche ausgebildet ist, für das Befahren von Verkehrswegen in Abhängigkeit von Positionen, welche mittels der Positionsbestimmungsvorrichtung (PV) anhand von durch den GNSS-Empfänger (GE) empfangenen Empfangssignalen bestimmt werden, eine zu zahlende Gebühr zu errechnen und einem der Positionsbestimmungsvorrichtung (PV) zugeordneten Fahrzeughalter in Rechnung zu stellen.

13. Positionsbestimmungsvorrichtung (PV) aufweisend:
- einen GNSS-Empfänger (GE);
- einen Mobilfunk-Empfänger (ME);
- Ermittlungsmittel (EmM), welche ausgebildet sind, einen Fehlerzeitbereich derart zu ermitteln, dass bei jedem von mehreren innerhalb des Fehlerzeitbereichs durchgeführten Positionsbestimmungsvorgängen entweder
a) eine mittels des GNSS-Empfängers (GE) ermittelte Positionsbestimmungsqualität des GNSS-Empfangs einen vorgegebenen GNSS-Qualitätsschwellwert unterschreitet
oder
b) mittels des GNSS-Empfängers (GE) eine Position ermittelt wird, wobei festgestellt wird, dass alle innerhalb des Fehlerzeitbereichs ermittelten Positionen einen räumlichen Stillstand der Positionsbestimmungsvorrichtung (PV) während des Fehlerzeitbereichs beschreiben;
- ein Auswertungsmittel (AM), welches die erfasste erste und zweite Mobilfunk-Empfangscharakteristik auswertet und als Auswerteergebnis ermittelt, ob sich die Positionsbestimmungsvorrichtung während des ermittelten Fehlerzeitbereiches geographisch bewegt hat,
- ein Erfassungsmittel (EM), welches ausgebildet ist, sowohl eine erste Mobilfunk-Empfangscharakteristik als auch wenigstens eine zweite Mobilfunk-Empfangscharakteristik des Mobilfunk-Empfangs des Mobilfunk-Empfängers (ME) während des ermittelten Fehlerzeitbereichs zu derart erfassen, dass die erste Mobilfunk-Empfangscharakteristik zu einem früheren Zeitpunkt und die zweite Mobilfunk-Empfangscharakteristik zu einem späteren Zeitpunkt innerhalb des Fehlerzeitbereiches gemessen wird, und
- ein Entscheidungsmittel (EsM), welches ausgebildet ist, in Abhängigkeit der ersten und wenigsten der zweiten Mobilfunk-Empfangscharakteristik über das Auslösen einer Signalisierung einer Fehlfunktion der Positionsbestimmungsvorrichtung (PV) zu entscheiden, indem es in Abhängigkeit von dem Auswerteergebnis über das Auslösen der Signalisierung entscheidet.

14. Computerprogrammprodukt (CP) zur Signalisierung einer Fehlfunktion einer mit zumindest einem GNSS-Empfänger und einem Mobilfunk-Empfänger (ME) versehenen Positionsbestimmungsvorrichtung (PV), welches Befehle enthält, die bei der Ausführung des Programms durch einen Computer diesen veranlassen, die folgenden Schritte auszuführen:
- Ermitteln eines Fehlerzeitbereichs, derart, dass bei jedem von mehreren innerhalb des Fehlerzeitbereichs durchgeführten Positionsbestimmungsvorgängen entweder
a) eine mittels des GNSS-Empfängers (GE) ermittelte Positionsbestimmungsqualität des GNSS-Empfangs einen vorgegebenen GNSS-Qualitätsschwellwert unterschreitet
oder
b) mittels des GNSS-Empfängers (GE) eine Position ermittelt wird, wobei festgestellt wird, dass alle innerhalb des Fehlerzeitbereichs ermittelten Positionen einen räumlichen Stillstand der Positionsbestimmungsvorrichtung (PV) während des Fehlerzeitbereichs beschreiben;
- Erfassen sowohl einer ersten Mobilfunk-Empfangscharakteristik als auch wenigstens einer zweiten Mobilfunk-Empfangscharakteristik des Mobilfunk-Empfangs des Mobilfunk-Empfängers (ME) während des ermittelten Fehlerzeitbereichs, wobei die erste Mobilfunk-Empfangscharakteristik zu einem früheren Zeitpunkt und die zweite Mobilfunk-Empfangscharakteristik zu einem späteren Zeitpunkt innerhalb des Fehlerzeitbereiches gemessen wird; und
- Entscheiden, in Abhängigkeit der ersten und wenigsten der zweiten Mobilfunk-Empfangscharakteristik, dass eine Fehlfunktion einer Positionsbestimmungsvorrichtung signalisiert wird, wenn eine Auswertung der erfassten ersten und zweiten Mobilfunk-Empfangscharakteristiken ergibt, dass sich die Positionsbestimmungsvorrichtung während des ermittelten Fehlerzeitbereiches geographisch bewegt hat.

## Claims

1. A method for signaling a malfunction of a position determination device (PV), which has a GNSS receiver (GE) and a mobile radio receiver (ME), **characterized by** the following method steps:
- identify an error time range such that in each of several position determination processes carried out within the error time range either
a) a position determination quality of the GNSS reception identified by means of the GNSS receiver (GE) falls below a predetermined GNSS quality threshold value, or
b) a position is identified by means of the GNSS receiver (GE) with being established that all positions identified within the error time range describe a spatial standstill of the position determination device (PV) during the error time range;
- detect both a first mobile radio reception characteristic and at least one second mobile radio reception characteristic of the mobile radio reception of the mobile radio receiver (ME) during the identified error time range, wherein the first mobile radio reception characteristic is measured at earlier time and the second mobile radio reception characteristic is measured at later time within the error time range; and
- decide, depending on the first and at least the second mobile radio reception characteristics, that a malfunction of a position determination device is signaled, if an evaluation of the detected first and the second mobile radio reception characteristics results in a position determination device having moved during the identified error time range.

2. The method according to claim 1, **characterized in that** it is being established that all positions identified within the error time range describe a spatial standstill of the position determination device (PV) during the error time range if:
a) the positions identified within the error time range by means of the GNSS receiver (GE) in pairs do not deviate from one another by more than a specified maximum distance; or
b) the positions identified within the error time range by means of the GNSS receiver (GE) are all located within a predetermined space interval around a space interval midpoint.

3. The method according to claim 1 or 2, **characterized by**:
- identify at least one device number of different transmission devices of a mobile radio system by evaluating the first and at least the second mobile radio reception characteristic of the mobile radio receiver (ME), and
- decide, depending on the at least one identified device number, that a malfunction of a position determination device is signaled.

4. The method according to claim 3, **characterized in that** the device number is one of the following numbers:
a) number of different transmission devices that are contained in the first or the second mobile radio reception characteristic;
b) number of different transmission devices that are contained in only one of the first and second mobile radio reception characteristics;
c) number of different transmission devices with which the mobile radio receiver enters into mobile radio communication based on the evaluation of the first and second mobile radio reception characteristics during the identified error time range.

5. The method according to claim 3 or 4, **characterized in that** a transmission device of a mobile radio system is identified from the first and/or second mobile radio reception characteristic **in that** a signal from this transmission device exceeds a predetermined signal strength in the first and/or second mobile radio reception characteristic.

6. The method according to one of the preceding claims, **characterized in that** an error counter is incremented for each error time range identified depending on the first and at least the second mobile radio reception characteristics, with the decision that a malfunction of a position determination device (PV) is signaled being also depending on status of the error counter.

7. The method according to one of the preceding claims, **characterized in that** the method steps are carried out at least partially in a central device (ZE) which is in radio communication with the position determination device (PV).

8. A signaling system for signaling a malfunction of a position determination device (PV), which comprises a GNSS receiver (GE) and a mobile radio receiver (ME), comprising:
- the position determination device (PV) having the GNSS receiver (GE) and the mobile radio receiver (ME),
- a determination means (EmM) which is designed to identify an error time range such that in each of several position determination processes carried out within the error time range either
a) a position determination quality of the GNSS reception identified by means of the GNSS receiver (GE) falls below a predetermined GNSS quality threshold value, or
b) a position is identified by means of the GNSS receiver (GE), with being established that all positions identified within the error time range describe a spatial standstill of the position determination device (PV) during the error time range;
- an evaluation means (AM) which evaluates the detected first and second mobile radio reception characteristics and identifies as evaluation result, whether the position determination device has moved geographically during the error time range identified;
- a detection means (EM), which is designed to detect both a first mobile radio reception characteristic and at least a second mobile radio reception characteristic of the mobile radio reception of the mobile radio receiver (ME) during the identified error time range so that the first mobile radio reception characteristic is measured at earlier time and the second mobile radio reception characteristic is measured at later time within the error time range; and
- a decision-making means (EsM), which is designed to decide on the triggering of a signaling of a malfunction of the position determination device (PV) in dependence on the first and at least the second mobile radio reception characteristics by deciding about the triggering of the signaling in dependence on the evaluation result.

9. The signaling system according to claim 8, **characterized in that** the decision means (EsM) is arranged in the position determination device (PV).

10. The signaling system according to claim 8, **characterized in that** the position determination device (PV) comprises the determination means (EmM) and a radio device which is designed to transmit the identified error time range and a communication protocol of the mobile radio receiver (ME) by radio to a central device (ZE), the central device (ZE) comprising the detection means (EM) and the decision-making means (EsM).

11. The signaling system according to one of claims 8 to 10, **characterized in that** the position determination device (PV) comprises a signaling device (SV) and is designed to trigger a signaling of the signaling device (SV) if the decision-making means (EsM) makes a positive decision about triggering the signaling.

12. A fee collection system having a signaling system according to one of claims 8 to 11 and a fee calculation device which is designed to calculate a fee payable and charge a vehicle owner associated with the position determination device (PV) for driving on traffic routes depending on positions which are determined by means of the position determination device (PV) on the basis of reception signals received by the GNSS receiver (GE).

13. A position determining device (PV) comprising:
- a GNSS receiver (GE);
- a mobile radio receiver (ME);
- determination means (EmM), which are designed to identify an error time range such that in each of several position determination processes carried out within the error time range either
a) a position determination quality of the GNSS reception identified by means of the GNSS receiver (GE) falls below a predetermined GNSS quality threshold value, or
b) a position is identified by means of the GNSS receiver (GE), with being established that all positions identified within the error time range describe a spatial standstill of the position determination device (PV) during the error time range;
- an evaluation means (AM) which evaluates the detected first and second mobile radio reception characteristics and identifies as evaluation result, whether the position determination device has moved geographically during the error time range identified;
- a detection means (EM), which is designed to detect both a first mobile radio reception characteristic and at least a second mobile radio reception characteristic of the mobile radio reception of the mobile radio receiver (ME) during the determined error time range so that the first mobile radio reception characteristic is measured at earlier time and the second mobile radio reception characteristic is measured at later time within the error time range; and
- a decision-making means (EsM), which is designed to decide on the triggering of a signaling of a malfunction of the position determination device (PV) in dependence on the first and at least the second mobile radio reception characteristics by deciding about the triggering of the signaling in dependence on the evaluation result.

14. A computer program product (CP) for signaling a malfunction of a position determination device (PV) provided with at least one GNSS receiver and a mobile radio receiver (ME), which contains commands causing at execution of the program by a computer him to execute at least the following steps:
- identify an error time range such that in each of several position determination processes carried out within the error time range either
a) a position determination quality of the GNSS reception identified by means of the GNSS receiver (GE) falls below a predetermined GNSS quality threshold value, or
b) a position is identified by means of the GNSS receiver (GE) with being established that all positions identified within the error time range describe a spatial standstill of the position determination device (PV) during the error time range;
- detect both a first mobile radio reception characteristic and at least one second mobile radio reception characteristic of the mobile radio reception of the mobile radio receiver (ME) during the determined error time range, wherein the first mobile radio reception characteristic is measured at earlier time and the second mobile radio reception characteristic is measured at later time within the error time range; and
- decide, depending on the first and at least the second mobile radio reception characteristics, that a malfunction of a position determination device is signaled, if an evaluation of the detected first and the second mobile radio reception characteristics results in a position determination device having moved during the identified error time range.

## Revendications

1. Un procédé de signalisation d'un dysfonctionnement d'un dispositif de détermination de position (PV), qui comporte un récepteur GNSS (GE) et un récepteur radio mobile (ME), **caractérisé par** les étapes de procédé suivantes :
- identifier une plage de temps d'erreur telle que dans chacun de plusieurs processus de détermination de position effectués dans la plage de temps d'erreur soit
a) une qualité de détermination de position de la réception GNSS identifiée au moyen du récepteur GNSS (GE) tombe en dessous d'une valeur seuil de qualité GNSS prédéterminée, ou
b) une position est identifiée au moyen du récepteur GNSS (GE), étant établi que toutes les positions identifiées dans la plage de temps d'erreur décrivent un arrêt spatial du dispositif de détermination de position (PV) pendant la plage de temps d'erreur ;
- détecter à la fois une première caractéristique de réception radio mobile et au moins une deuxième caractéristique de réception radio mobile de la réception radio mobile du récepteur radio mobile (ME) pendant la plage de temps d'erreur identifiée, dans lequel la première caractéristique de réception radio mobile est mesurée à un moment antérieur et la deuxième caractéristique de réception radio mobile est mesurée à un moment postérieur dans la plage de temps d'erreur ; et
- décider, en fonction des première et au moins deuxième caractéristiques de réception radio mobiles, qu'un dysfonctionnement d'un dispositif de détermination de position est signalé, lorsqu'une évaluation des première et deuxième caractéristiques de réception radio mobiles ressort que le dispositif de détermination de position s'est déplacé géographiquement pendant la plage de temps d'erreur.

2. Le procédé selon la revendication 1, **caractérisé en ce qu'**il est établi que toutes les positions identifiées dans la plage de temps d'erreur décrivent un arrêt spatial du dispositif de détermination de position (PV) pendant la plage de temps d'erreur si :
a) les positions identifiées dans la plage de temps d'erreur au moyen du récepteur GNSS (GE) ne s'écartent pas par paire l'une de l'autre de plus d'une distance maximale spécifiée ; ou
b) les positions identifiées dans la plage de temps d'erreur au moyen du récepteur GNSS (GE) sont toutes situées dans un intervalle d'espace prédéterminé autour d'un point médian d'intervalle d'espace.

3. Le procédé selon la revendication 1 ou 2, **caractérisé par** :
- identifier au moins un nombre de dispositifs de différents dispositifs de transmission d'un système radio mobile en évaluant les première et au moins deuxième caractéristiques de réception radio mobiles du récepteur radio mobile (ME), et
- décider, en fonction du au moins un nombre de dispositifs identifié, qu'un dysfonctionnement d'un dispositif de détermination de position est signalé.

4. Le procédé selon la revendication 3, **caractérisé en ce que** le nombre de dispositifs est l'un des nombres suivants :
a) un nombre de dispositifs de transmission différents qui sont contenus dans la première ou la deuxième caractéristique de réception radio mobile ;
b) un nombre de dispositifs de transmission différents qui sont contenus dans une seule des première et deuxième caractéristiques de réception radio mobiles ;
c) un nombre de dispositifs de transmission différents avec lesquels le récepteur radio mobile entre en communication radio mobile sur la base de l'évaluation des première et deuxième caractéristiques de réception radio mobiles pendant la plage de temps d'erreur identifiée.

5. Le procédé selon la revendication 3 ou 4, **caractérisé en ce qu'**un dispositif de transmission d'un système de radio mobile est identifié à partir de la première et/ou de la deuxième caractéristique de réception radio mobile **en ce qu'**un signal de ce dispositif de transmission dépasse une intensité de signal prédéterminée dans la première et/ou la deuxième ou deuxième caractéristique de réception radio mobile.

6. Le procédé selon l'une des revendications précédentes, **caractérisé en ce qu'**un compteur d'erreurs est incrémenté pour chaque plage de temps d'erreur identifiée en fonction des première et au moins deuxième caractéristiques de réception radio mobiles, dans lequel la décision qu'un dysfonctionnement d'un dispositif de détermination de position (PV) est signalé a lieu également en fonction de l'état du compteur d'erreurs.

7. Le procédé selon l'une des revendications précédentes, **caractérisé en ce que** les étapes du procédé sont effectuées au moins partiellement dans un dispositif central (ZE) qui est en communication radio avec le dispositif de détermination de position (PV).

8. Un système de signalisation pour signaler un dysfonctionnement d'un dispositif de détermination de position (PV), qui comprend un récepteur GNSS (GE) et un récepteur radio mobile (ME), comprenant :
- le dispositif de détermination de position (PV) avec le récepteur GNSS (GE) et le récepteur radio mobile (ME),
- un moyen d'identification (EmM), qui est conçu pour identifier une plage de temps d'erreur telle que dans chacun de plusieurs processus de détermination de position effectués dans la plage de temps d'erreur, soit
a) une qualité de détermination de position de la réception GNSS identifiée au moyen du récepteur GNSS (GE) tombe en dessous d'une valeur seuil de qualité GNSS prédéterminée, ou
b) une position est identifiée au moyen du récepteur GNSS (GE), étant établi que toutes les positions identifiées dans la plage de temps d'erreur décrivent un arrêt spatial du dispositif de détermination de position (PV) pendant la plage de temps d'erreur ;
- un moyen d'évaluation (AM) qui évalue les première et deuxième caractéristiques de réception radio mobiles détectées et identifie comme résultat d'évaluation si le dispositif de détermination de position s'est déplacé géographiquement pendant la plage de temps d'erreur identifiée ;
- un moyen de détection (EM), qui est conçu pour détecter à la fois une première caractéristique de réception radio mobile et au moins une deuxième caractéristique de réception radio mobile de la réception radio mobile du récepteur radio mobile (ME) pendant la plage de temps d'erreur identifiée de telle manière que la première caractéristique de réception radio mobile est mesurée à un moment antérieur et la deuxième caractéristique de réception radio mobile est mesurée à un moment postérieur dans la plage de temps d'erreur ; et
- un moyen de décision (EsM), qui est conçu pour décider du déclenchement d'une signalisation de dysfonctionnement d'un dispositif de détermination de position (PV) en fonction des première et au moins deuxième caractéristiques de réception radio mobiles par décider en fonction du résultat d'évaluation du déclanchement de la signalisation.

9. Le système de signalisation selon la revendication 8, **caractérisé en ce que** le moyen de décision (EsM) est disposé dans le dispositif de détermination de position (PV).

10. Le système de signalisation selon la revendication 8, **caractérisé en ce que** le dispositif de détermination de position (PV) comporte les moyens de détermination (EmM) et un dispositif radio qui est conçu pour transmettre la plage de temps d'erreur identifiée et un protocole de communication du récepteur radio mobile (ME) par radio à un dispositif central (ZE), le dispositif central (ZE) comportant le moyen de détection (EM) et le moyen de décision (EsM).

11. Le système de signalisation selon l'une des revendications 8 à 10, **caractérisé en ce que** le dispositif de détermination de position (PV) comporte un dispositif de signalisation (SV) et est conçu pour déclencher une signalisation du dispositif de signalisation (SV) si le moyen de décision (EsM) prend une décision positive sur le déclenchement de la signalisation.

12. Le système de perception de redevance avec un système de signalisation selon l'une des revendications 8 à 11 et un dispositif de calcul de redevance qui est conçu pour calculer une redevance à payer et facturer un propriétaire de véhicule associé au dispositif de positionnement (PV) pour circuler sur des voies de circulation en fonction de positions qui sont identifiées au moyen du dispositif de détermination de position (PV) sur la base de signaux de réception reçus par le récepteur GNSS (GE).

13. Un dispositif de détermination de position (PV) comportant :
- un récepteur GNSS (GE) ;
- un récepteur radio mobile (ME) ;
- des moyens d'identification (EmM), qui sont conçus pour identifier une plage de temps d'erreur telle que dans chacun de plusieurs processus de détermination de position effectués dans la plage de temps d'erreur, soit
a) une qualité de détermination de position de la réception GNSS identifiée au moyen du récepteur GNSS (GE) tombe en dessous d'une valeur seuil de qualité GNSS prédéterminée, ou
b) une position est identifiée au moyen du récepteur GNSS (GE), étant établi que toutes les positions identifiées dans la plage de temps d'erreur décrivent un arrêt spatial du dispositif de détermination de position (PV) pendant la plage de temps d'erreur ;
- un moyen d'évaluation (AM) qui évalue les première et deuxième caractéristiques de réception radio mobiles détectées et identifie comme résultat d'évaluation si le dispositif de détermination de position s'est déplacé géographiquement pendant la plage de temps d'erreur identifiée ;
- un moyen de détection (EM), qui est conçu pour détecter à la fois une première caractéristique de réception radio mobile et au moins une deuxième caractéristique de réception radio mobile de la réception radio mobile du récepteur radio mobile (ME) pendant la plage de temps d'erreur identifiée de telle manière que la première caractéristique de réception radio mobile est mesurée à un moment antérieur et la deuxième caractéristique de réception radio mobile est mesurée à un moment postérieur dans la plage de temps d'erreur ; et
- un moyen de décision (EsM), qui est conçu pour décider du déclenchement d'une signalisation de dysfonctionnement d'un dispositif de détermination de position (PV) en fonction des première et au moins deuxième caractéristiques de réception radio mobiles par décider en fonction du résultat d'évaluation du déclanchement de la signalisation.

14. Un produit programme d'ordinateur (CP) pour signaler un dysfonctionnement d'un dispositif de détermination de position (PV) pourvu d'au moins un récepteur GNSS et d'un récepteur radio mobile (ME), qui contient des commandes qui lors de l'exécution par un ordinateur causent celui-ci à exécuter les étapes suivantes :
- identifier une plage de temps d'erreur telle que dans chacun de plusieurs processus de détermination de position effectués dans la plage de temps d'erreur soit
a) une qualité de détermination de position de la réception GNSS identifiée au moyen du récepteur GNSS (GE) tombe en dessous d'une valeur seuil de qualité GNSS prédéterminée, ou
b) une position est identifiée au moyen du récepteur GNSS (GE), étant établi que toutes les positions identifiées dans la plage de temps d'erreur décrivent un arrêt spatial du dispositif de détermination de position (PV) pendant la plage de temps d'erreur ;
- détecter à la fois une première caractéristique de réception radio mobile et au moins une deuxième caractéristique de réception radio mobile de la réception radio mobile du récepteur radio mobile (ME) pendant la plage de temps d'erreur identifiée, dans lequel la première caractéristique de réception radio mobile est mesurée à un moment antérieur et la deuxième caractéristique de réception radio mobile est mesurée à un moment postérieur dans la plage de temps d'erreur ; et
- décider, en fonction des première et au moins deuxième caractéristiques de réception radio mobiles, qu'un dysfonctionnement d'un dispositif de détermination de position est signalé, lorsqu'une évaluation des première et deuxième caractéristiques de réception radio mobile détectées ressort que le dispositif de détermination de position s'est déplacé géographiquement pendant la plage de temps d'erreur.
